# EUROPEAN PATENT APPLICATION

(11) **EP 4 763 595 A1**
(43) Date of publication of application: **24.06.2026**
(21) Application number: 24854354.8
(22) Date of filing: 31.07.2024
(51) Int. Cl.: B60L 53/34, B60L 53/12, B60L 53/16, B60L 53/30

(54) **VEHICLE CHARGING DEVICE**

(30) Priority: 14.08.2023 KR 20230106529
(71) Applicant: LG INNOTEK CO. LTD, Gangseo-gu Seoul 07796 (KR)
(72) Inventor: LEEM, Sung Hyun, Seoul 07796 (KR)
(74) Representative: Plasseraud IP
(86) International application number: PCT/KR2024/011236
(87) International publication number: WO 2025/037802

(57) **Abstract**

A vehicle charging device according to an embodiment of the present invention co mprises: a reception coil disposed to face a wireless charging coil of an EVSE; a power sou rce unit for converting power received from the reception coil; a communication unit for co mmunicating with the EVSE and an EVCC of a vehicle; a control unit for controlling char ging according to information received by the communication unit; and a charging gun ins erted into an inlet of the vehicle.

## Description

### TECHNICAL FIELD

The present invention relates to a vehicle charging device.

### BACKGROUND ART

Environmentally friendly vehicles such as electric vehicles (EVs) or plug-in hybrid electric vehicles (PHEVs) use electric vehicle supply equipment (EVSE) installed at charging stations for battery charging.

In order for interaction between the electric vehicles and the EVSEs, various protocols are being actively established. Regulations regarding electric vehicle charging may be broadly classified into charging systems, charging interfaces, communication protocols, etc.

However, since different regulations are adopted by each country or automobile company, charging devices for electric vehicles, battery packs, and battery management systems (BMS) have been developed and designed according to each regulation.

Vehicles that are not equipped with a wireless charging receiver may not be charged through a wireless charging station. In addition, there is a limitation in that the vehicle charging is not performed when there are many users of the wired charging station or when the wired charging station is malfunctioning.

### DISCLOSURE OF THE INVENTION

### TECHNICAL PROBLEM

The technical problem to be solved by the present invention is to provide a vehicle charging device.

### TECHNICAL SOLUTION

In order to solve the above technical problem, a vehicle charging device according to an embodiment of the present invention includes: a reception coil disposed to face a wireless charging coil of an EVSE; a power source unit configured to convert power received from the reception coil; a communication unit configured to communicate with the EVSE and an EVCC of a vehicle; a control unit configured to control charging according to information received from the communication unit; and a charging gun inserted into an inlet of the vehicle.

The power source unit may include: an inverter part configured to convert AC power received from the reception coil into DC power; and a booster part configured to boost a voltage of the DC power converted by the inverter part.

Each of the power source unit, the communication unit, and the control unit may be provided in the form of a box, and each of the reception coil and the charging gun may be connected to the box through a cable.

The control unit may be configured to determine whether to start the charging in consideration of whether the reception coil and the EVSE are connected to the wireless charging coil and whether the charging gun is connected to the inlet.

The communication unit may be configured to perform PWM communication with the reception coil.

The vehicle charging device may further include a battery into which power for operating the vehicle charging device is charged from the reception coil.

### ADVANTAGEOUS EFFECTS

According to the embodiments, even if the vehicle is not equipped with the wireless charging receiver, the vehicle may be charged at the wireless charging station.

In addition, the coil pad that is capable of the wireless vehicle charging may be provided to simplify and miniaturize the vehicle charging device.

### BRIEF DESCRIPTION OF THE DRAWINGS

FIG. 1 is a view illustrating a vehicle charging system.
FIG. 2 is a view illustrating a vehicle charging device according to this embodiment.
FIGS. 3 to 5 are block diagrams of a vehicle charging device according to another embodiment of the present invention.

### MODE FOR CARRYING OUT THE INVENTION

Hereinafter, preferred embodiments of the present invention will be described in detail with reference to the accompanying drawings.

However, the technical idea of the present invention is not limited to some of the embodiments described, but may be implemented in various different forms, and one or more of the components in embodiments may be selectively combined or substituted for use even within the scope of the technical idea of the present invention.

In addition, terms (including technical and scientific terms) used in this embodiment may be interpreted as having a meaning that may be generally understood by a person of ordinary skill in the technical field to which this embodiment belongs, unless explicitly and specifically defined and described, and the terms that are commonly used, such as terms defined in a dictionary, may be interpreted in consideration of the contextual meaning of the relevant technology.

In addition, the terms used in this embodiment are for the purpose of describing the embodiments and are not intended to limit the present invention.

In this specification, the singular may also include the plural unless specifically stated otherwise in the phrase, and when it is described as "A and (or at least one) of B, C", it may include one or more of all combinations that may be combined with A, B, C.

In addition, in describing components of this embodiment, the terms such as first, second, A, B, (a), (b), etc. may be used. These terms are only intended to distinguish one component from another and are not intended to limit the nature, order, or sequence of the component.

In addition, when a component is described as being 'connected', 'coupled', or 'linked' to another component, it may include not only cases where the component is 'connected', 'coupled', or 'linked' directly to the other component, but also cases in which the component is 'connected', 'coupled', or 'linked' by another component between the component and the other component.

In addition, when described as being formed or arranged "above (upper)" or "below (lower)" each component, "above (upper)" or "below (lower)" includes not only the case where the two components are in direct contact with each other, but also the case in which one or more other components are formed or arranged between the two components. In addition, when expressed as "above (upper)" or "below (lower)", it may include the meaning of not only the upward direction but also the downward direction based on one component.

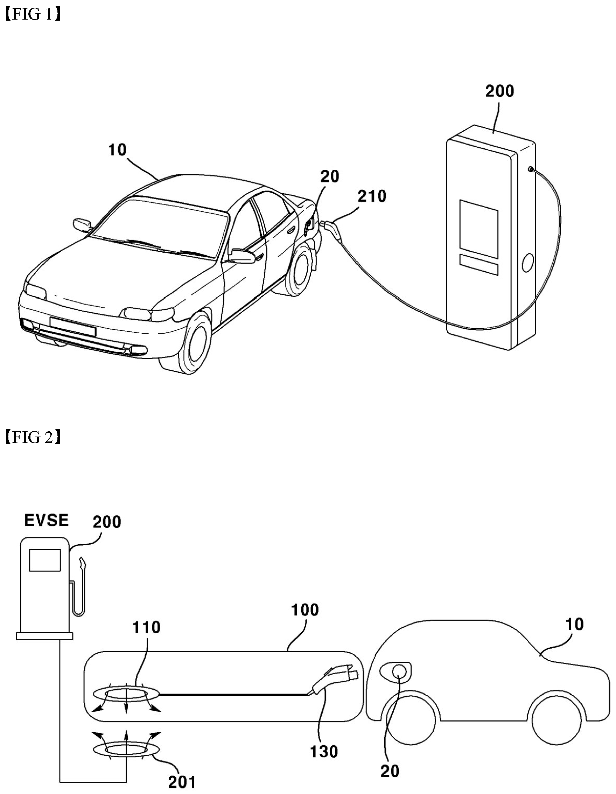

FIG. 1 is a view illustrating a vehicle charging system. A vehicle charging system including an electric vehicle may include a vehicle 10 and an electric vehicle supply equipment (EVSE) 200. The vehicle 10 may be an electric vehicle (EV) and may be charged from the EVSE 200. A charging cable connected to the EVSE 200 may be connected to a charging port of the vehicle 10 to receive charging power from the EVSE 200.

The EVSE 200 may be equipment that supplies AC or DC power and may be disposed in a charging station or within a home. The EVSE 200 may not be limited to its position and may also be implemented to be portable. In this specification, the EVSE 200 may be interchangeably referred to as a charging station (supply), an AC charging station (AC supply), a DC charging station (DC supply), a socket-outlet, etc. The electric vehicle communication controller (EVCC) may be a component included in the vehicle 10 and may be connected to an electronic control unit (ECU) within the vehicle 10. The EVCC may perform control of charging signals and charging power amounts within the vehicle.

When a user carries the charging gun 210 by hands to insert a charging connector of the charging gun 210 into an inlet 21 provided in the vehicle 10, power supplied from the EVSE 200 is supplied to the vehicle 10 through the charging cable and the charging gun 210 to charge the battery of the vehicle 10.

The charging port 20 may be provided on an outer surface of the vehicle 10 and may include an inlet 21. The inlet 21 may be a socket to which the charging connector of the charging gun 210 is connected. The charging port 20 may include a cover that is opened and closed depending on whether the charging is performed. The inlet 21 may include a plurality of charging pins.

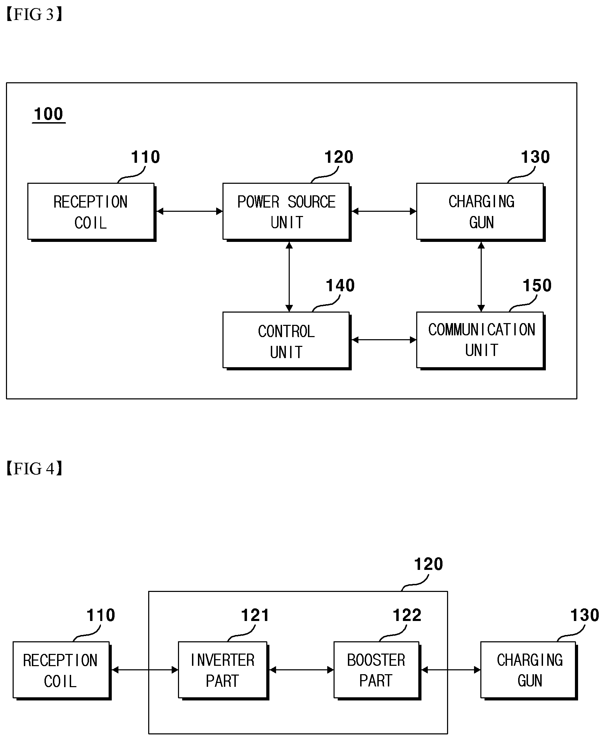

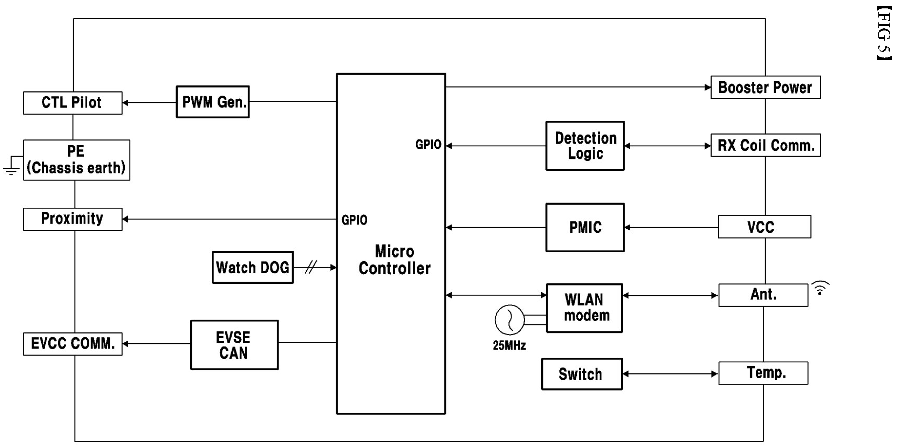

FIG. 2 is a view illustrating a vehicle charging device according to this embodiment, and FIGS. 3 to 5 are block diagrams of a vehicle charging device according to another embodiment of the present invention.

A vehicle charging device 100 according to this embodiment may include a reception coil 110, a power source unit 120, a communication unit 150, a control unit 140, and a charging gun 130.

The reception coil 110 may be disposed to face a wireless charging coil of an EVSE 200. The wireless charging coil of the EVSE 200 may be disposed in an area which is adjacent to the EVSE 200 and within which a vehicle is parked for charging. The reception coil 110 may be provided as a coil pattern on a pad. The reception coil 110 may be provided in a shape corresponding to that of the wireless charging coil of the EVSE 200.

The power source unit 120 may convert the power received from the reception coil 110. The power source unit 120 may convert the power received from the reception coil 110 into power suitable for charging the vehicle. The power source unit 120 may include an inverter part 121 and a booster part 122. The inverter part 121 may convert the AC power received from the reception coil 110 into DC power. The booster part 122 may boost the DC power converted by the inverter part 121. The power source unit 120 may convert the power received from the reception coil 110 into a form that is suitable for various vehicle types and charging modes in response to the control by the control unit 140.

The communication unit 150 may communicate with the EVSE 200 and an electric vehicle communication controller (EVCC) of the vehicle 10. The EVCC may be a component included in the vehicle 10 and may be connected to an electronic control unit (ECU) within the vehicle 10. The EVCC may perform control of charging signals and charging power amounts within the vehicle. The communication unit 150 may communicate with a battery management system (BMS) of the vehicle 10. The EVCC may be connected to the BMS either wirelessly or wiredly. The communication unit 150 may perform PWM communication with the reception coil 110.

The control unit 140 may collect various pieces of information about a state of charge (SoC) of a battery disposed in the vehicle 10 through the communication unit 150. The communication unit 150 may perform PWM communication with the reception coil 110. Thus, power transmitted/received from/into the reception coil 110, a charging rate, and whether a normal operation is being performed may be monitored.

The control unit 140 may control the power source unit 120 so that the power received from the reception coil 110 is converted into power suitable for various vehicle types and charging modes. The control unit 140 may determine whether to start the charging in consideration of whether the reception coil 110 is connected to the wireless charging coil of the EVSE 200 and whether the charging gun 130 is connected to the inlet 20. The control unit 140 may receive a user's control through a user terminal to control the vehicle charging.

The charging gun 130 may be inserted into the inlet of the vehicle 10. The charging gun 130 may be connected to the power source unit 120 through a cable. When a user carries the charging gun 130 by hands to insert a charging connector of the charging gun 130 into an inlet 21 provided in the vehicle 10, the power supplied from the EVSE 200 is supplied to the vehicle 10 through the charging cable and the charging gun 130 to charge the battery of the vehicle 10.

In the vehicle charging device 100, each of the power source unit 120, the communication unit 150, and the control unit 140 may be provided in the form of a box, and each of the reception coil 110 and the charging gun 130 may be connected to the box through the cable. A box-shaped main body may have water-resistant properties for use in outdoor environments.

When the reception coil 110 connected to the cable and the charging gun 130 are not in use, the cable may be wound and accommodated within the box. Alternatively, when in use, the reception coil 110 and the charging gun 130, which are connected to the cable, may be withdrawn out from the box so that the cable is capable of extending for use. Thus, the vehicle charging device 100 may be easily carried, and convenience of use thereof may be improved.

The vehicle charging device 100 may include a battery for charging power required for the operation of the vehicle charging device 100. The battery may supply the power required for operation to the power unit 120, the communication unit 150, and the control unit 140, which are included in the vehicle charging device 100. The battery may be charged from the reception coil 110. The battery may supply power for charging the vehicle. The power received from the EVSE 200 through the reception coil 110 may be used to charge the vehicle, and the power already stored in the battery may also be used to charge the vehicle. As a result, it is possible to achieve an effect similar to that of charging the vehicle using two power lines, and thus, fast charging may be possible.

According to the embodiments, even if the vehicle is not equipped with the wireless charging receiver, the vehicle may be charged at the wireless charging station. In addition, the coil pad that is capable of the wireless vehicle charging may be provided to simplify and miniaturize the vehicle charging device.

It will be understood by those skilled in the art that various changes in form and details may be made therein without departing from the spirit and scope of the invention as defined by the appended claims. Therefore, the disclosed methods should be considered in descriptive sense only and not for purposes of limitation. Therefore, the scope of the invention is defined not by the detailed description of the invention but by the appended claims, and all differences within the scope will be construed as being included in the present invention.

## Claims

1. A vehicle charging device comprising:
a reception coil disposed to face a wireless charging coil of an EVSE;
a power source unit configured to convert power received from the reception coil;
a communication unit configured to communicate with the EVSE and an EVCC of a vehicle;
a control unit configured to control charging according to information received from the communication unit; and
a charging gun inserted into an inlet of the vehicle.

2. The vehicle charging device according to claim 1, wherein the power source unit comprises:
an inverter part configured to convert AC power received from the reception coil into DC power; and
a booster part configured to boost a voltage of the DC power converted by the inverter part.

3. The vehicle charging device according to claim 1, wherein each of the power source unit, the communication unit, and the control unit is provided in the form of a box, and
each of the reception coil and the charging gun is connected to the box through a cable.

4. The vehicle charging device according to claim 1, wherein the control unit is configured to determine whether to start the charging in consideration of whether the reception coil and the EVSE are connected to the wireless charging coil and whether the charging gun is connected to the inlet.

5. The vehicle charging device according to claim 1, wherein the communication unit is configured to perform PWM communication with the reception coil.

6. The vehicle charging device according to claim 1, further comprising a battery into which power for operating the vehicle charging device is charged from the reception coil.
